# EUROPÄISCHE PATENTANMELDUNG

(11) **EP 0 805 284 A2**
(43) Veröffentlichungstag der Anmeldung: **05.11.1997**
(21) Anmeldenummer: 97107238.4
(22) Anmeldetag: 30.04.1997
(51) Int. Cl.: F16C 35/06, F16C 13/00

(54) **Lagereinsatz**

(30) Priorität: 02.05.1996 DE 19617482
(71) Anmelder: Krumm, Ulrich, 42929 Wermelskirchen (DE); Frorath, Frank, 42499 Hückeswagen (DE); Frorath, Ralf, 42499 Rückeswagen (DE)
(72) Erfinder: Krumm, Ulrich, 42929 Wermelskirchen (DE); Frorath, Frank, 42499 Hückeswagen (DE); Frorath, Ralf, 42499 Rückeswagen (DE)
(74) Vertreter: Eichler, Peter, Dipl.-Ing.

(57) **Zusammenfassung**

Die vorliegende Erfindung betrifft einen Lagereinsatz (9) der in Umfangsrichtung geteilt ist, wobei ein äußeres Kunststoff-Spritzteil (10) und ein inneres Kunststoff-Spritzteil (11) über ein am Außenring (10) eingespritztes und am Innenring (11) mittels Einschnappverrastung (16) befestigtes Wälzlager (13) relativ zueinander drehbar gelagert sind.

## Beschreibung

Die vorliegende Erfindung betrifft einen Lagereinsatz nach Oberbegriff von Anspruch 1.

Derartige Lagereinsätze werden in sogenannte Rollenzylinder endseitig eingesteckt und dienen dort zur Lagerung einer durchgehenden Drehachse. Zu diesem Zweck ist der Lagereinsatz in Umfangsrichtung zweiteilig. Zwischen äußerem Umfangsteil und innerem Umfangsteil wird ein Wälzlager angeordnet, so daß äußeres Umfangsteil und inneres Umfangsteil relativ zueinander drehbar sind. Am äußeren Umfangsteil ist der Rollenzylinder gelagert, am inneren Umfangsteil die Rollenachse.

Derartige Lagereinsätze gibt es in einer Vielzahl unterschiedlicher Ausführungen. Die aus dem DE-GM 8 005 696 bekannte Ausführung besteht zwar aus lediglich zwei unterschiedlichen Teilen, die einfach zusammengesetzt werden können.

Allerdings ist dort eine Filzdichtung zwischen dem rotierenden Gehäuse und dem stillstehenden Deckel eingespannt. Dies führt zu einer axialen Verspannung des Wälzlagers und damit zum Dichtungsverschleiß. Zudem treten bei hohen Drehzahlen Vibrationen auf. Diese Vibrationen werden den axialen Vorspannkräften überlagert. Dementsprechend hoch muß die Flächenpressung zwischen Wälzlageraußenring und Gehäuse sein. Andernfalls besteht die Gefahr daß sich der Lagersitz axial losrüttelt.

Aufgabe der Erfindung ist es, die bekannten Lagereinsätze so weiterzubilden, daß unter Beibehaltung der einfachen Montage die Dauerhaltbarkeit auch beim Betrieb mit hohen Drehzahlen verbessert wird. Diese Aufgabe löst die Erfindung mit den Merkmalen des Anspruchs 1.

Unter einer hohen Drehzahl werden Drehzahlen bis zu etwa 700/min verstanden. Bei diesen hohen Drehzahlen kommt es darauf an, das Wälzlager sowohl am Außenring als auch am Innenring axial festzulegen und darüber hinaus den Außenring zusätzlich in einer Preßpassung zu lagern.

Mit dieser Preßpassung in Verbindung mit der axialen Festlegung wird eine dauerhaft spielfreie dreidimensionale Einspannung des Außenrings erreicht, der zusätzlich die dreidimensionale Einspannung des Innenrings überlagert wird.

Die Kombination dieser Einspannung mit berührungslosen Dichtmitteln gewährt verschleißfreie Dichtungsfunktion auch bei hohen Betriebsdrehzahlen. Dies wird durch die Vermeidung von Wärmeerzeugung infolge sonst üblicher Kontaktreibung erzielt.

Ein fettgefülltes Lager im Sinne der vorliegenden Erfindung nimmt allein im Bereich des Wälzkörperkäfigs eine ausreichende Menge an Schmierfett auf, um den Dauerbetrieb des Lagers zu gewährleisten. Es bedarf daher keiner weiteren Schmiermitteltaschen o.ä. zur Einlagerung, sodaß bei unmittelbarer Unterbringung der Fettmenge im Bereich des Wälzkörperkäfigs die berührungslosen Dichtmittel vollkommen ausreichend sind.

Für die Erfindung kommen zwei Ausführungsvarianten in Betracht. Bei beiden Varianten wird der Wälzlageraußenring unmittelbar von dem äußeren Kunststoff-Spritzteil sowohl am Außenumfang als auch an beiden Stirnseiten umfaßt.

Bei der ersten Variante ist der Wälzlageraußenring von dem Material des äußeren Kunststoff-Spritzteils umfassend umspritzt.

Aus dieser Ausführungsform der Erfindung ergibt sich der Vorteil, daß die am Wälzlageraußenring auftretende Umfangslast bereits durch das eingespritzte Wälzlager mit dem erforderlichen Pressitz aufgenommen wird, so daß zumindest der bislang übliche Einpressvorgang für das Wälzlager fertigungstechnisch überflüssig wird.

Dieser Vorteil wird dadurch erreicht, daß das äußere Kunststoff-Spritzteil nach dem Spritzvorgang erkaltet und dabei um einen gewissen Prozentsatz schwindet. Währenddessen wird das Wälzlager am Wälzlageraußenring von dem umgebenden Kunststoff des äußeren Kunststoff-Spritzteils so eingespannt, daß sich automatisch der notwendige Pressitz ergibt.

Dabei ist zu berücksichtigen, daß die Schrumpfung nicht nur in radialer sondern auch in axialer Richtung erfolgt.

Auf diese Weise wird das Wälzlager am umfangsbelasteten Lageraußenring sowohl in radialer als auch in axialer Richtung festgelegt. Ein verbesserter Rundlauf durch die symmetrische Schrumpfung wird erreicht. Die gesamte Breite des Pressitzes des äußeren Kunststoff-Spritzteils liegt in inniger Anlage an dem Wälzlageraußenring an.

Bei einer anderen Variante der Erfindung ist der Wälzlageraußenring in das Kunststoff-Spritzteil unter radialer Pressung eingesetzt und beidseitig von einer dicht benachbarten umlaufenden Wulst/einem Ringbund axial gefesselt. Die radiale Dicke der Wulst ist lediglich so groß, daß das Wälzkörperlager unter Ausnutzung der elastischen Materialeigenschaften an der Wulst vorbei auf den Pressitz auf- bzw. von dem Pressitz abgeschoben werden kann. Weil die Wulst in beiden Axialrichtungen mit einer schrägen Flanke ausläuft, wird das Wälzkörperlager auch zerstörungsfrei demontierbar. Dennoch erfolgt in der Montagestellung die axiale Fesselung.

Ein weiteres Merkmal der Erfindung ist es, daß das innere Kunststoff-Spritzteil in den Wälzlagerinnenring eingesteckt wird und dort mittels einer hintergreifenden Einschnappverrastung sicher fixiert ist. Es ist folglich außer dem Spritzvorgang lediglich noch ein Zusammenstecken der beiden Kunststoff-Spritzteile zur Herstellung des Lagereinsatzes notwendig.

Dabei ist die Erfindung, gemessen am Fortschritt, lediglich von geringem Aufwand. Es genügt, für die verwendeten Wälzlager derartiger Förderrollen jeweils eine Spritzgußform zu fertigen, die dann sowohl für die rechte als auch für die linke Rollenseite Verwendung finden kann.

Derartige Förderrollen sollen auf Drehachsen gelagert werden, welche die Enden der Förderrollen überragen und in einen entsprechenden Lagerrahmen eingesetzt sind. Demgemäß besteht zwischen dem Wälzlagerinnenring und der Drehachse ein sogenannter Punktlastangriff. Dies bedeutet, daß die Richtung der Punktlast sich während der Drehung der Förderrolle nicht ändert. Die entsprechende Last greift stets in derselben Kontaktzone zwischen Wälzlagerinnenring und Drehachse an.

Aus diesem Grunde genügt ein formschlüssiger Eingriff zwischen der Einschnappverrastung und dem Wälzlagerinnenring. Die hierbei auftretende Vorspannung der Einschnappverrastung gegenüber dem Wälzlagerinnenring ist zwar von Bedeutung für die Präzision, daß heißt die Spielfreiheit, nicht jedoch von Bedeutung für das funktionssichere Lagern der Förderrolle auf ihrer Drehachse.

Dennoch bietet die Einschnappverrastung aus einem zu spritzenden Kunststoff den Vorteil, daß eine hohe Fertigungspräzision erzielt wird, obwohl die Lagerung des Lagers an lediglich zwei voneinander getrennten Bauteilen erfolgt. Will man verhindern, daß Staub, Flusen etc. in den Lagerstellenbereich eindringen, so bietet es sich an, das innere Kunststoff-Spritzteil ringdeckelartig auszubilden. Der Ringdeckel soll das äußere Kunststoff-Spritzteil übergreifen und zwischen innerem und äußerem Kunststoff-Spritzteil sollen im Bereich des Ringdeckels miteinander korrespondierende ringförmig umlaufende berührungslose Labyrinthdichtungen liegen.

Derartige Labyrinthdichtungen bieten den Vorteil, auch bei hohen Drehgeschwindigkeiten der Förderrollen keiner Erwärmung zu unterliegen, somit kein Verschleiß, somit keine Hemmung der Förderrollen.

Aus diesem Grund läßt sich als Material für den Lagereinsatz Polypropylen verwenden. Wird dieses Polypropylen so eingestellt, daß der elektrische Widerstand der Kunststoff-Spritzteile zwischen 100 Ohm und 1.000.000 Ohm liegt, sind praktisch alle vorkommenden Anwendungsfälle von Förderrollen mit hohen Drehzahlen abgedeckt. Dabei wird der elektrische Widerstand bei montiertem Lagereinsatz zwischen einem beliebigen Punkt des äußeren Umfangssitzes und einem korrespondierenden, daß heißt möglichst in einer Radialebene mit dem ersten Meßpunkt liegenden zweiten Meßpunkt in der Durchgangsbohrung gemessen.

Bei der Messung sind die Kunststoff-Spritzteile mit dem Wälzlager zusammengebaut. Die Meßbedingungen entsprechen deshalb dem Einbaufall des Lagereinsatzes. Da üblicherweise der Rollenzylinder und die Rollenachse aus Metall sind, wird über eine derartige Widerstandsbestimmung praktisch der Widerstand zwischen Rollenzylinder und Rollenachse im Einbaufall ermittelt.

Dieser Widerstand bestimmt daher die Fähigkeit, elektrisch statische Aufladungen der Förderrolle zu vermeiden, die naturgemäß durch ständige Bewegung der Förderrolle niemals unterbunden werden können.

Vorteilhaft ist eine Weiterbildung, bei welcher das innere Kunststoff-Spritzteil einen hohlen Einsteckzapfen für den Wälzlagerinnenring aufweist, der am freien Ende außen konisch angeschrägt ist. Auf diese Weise läßt sich das innere Kunststoff-Spritzteil einfach in den Wälzlagerinnenring hineinpressen. Der hohle Einsteckzapfen gleitet dabei mit seiner konischen Spitzenanschrägung in den Wälzlagerinnenring ein und der Einsteckzapfen läßt sich dann problemlos soweit in den Wälzlagerinnenring treiben, bis der Einsteckzapfen mit einem vorgegebenen Sitzbereich im Wälzlagerinnenring sitzt. Der Sitzbereich ist durch eine Durchmesserstufe am Einsteckzapfen begrenzt. In diesem Moment muß die Anschrägung des Einsteckzapfens hinter den Wälzlagerinnenring zurückschnappen und somit den Einsteckzapfen axial rutschsicher am Wälzlagerinnenring halten.

Bildet man den Einsteckzapfen rundzylindrisch aus, so wird unabhängig von der jeweiligen Einbaustellung stets ein optimaler Rundlaufsitz für das Wälzlager erreicht. Für diesen Fall läßt sich die Einschnappverrastung durch Axialschlitze verwirklichen, die am Einsteckzapfen vom Ende kommend ausgespart sind.

Materialsparend ist eine Weiterbildunng, bei welcher der Wälzlageraußenring in einer Vielzahl von axial verlaufenden und umfangsmäßig verteilten Sitzrippen eingespritzt ist, die sich zwischen äußerem Umfangssitz und Wälzlageraußenring erstrecken.

Es ist also nicht unbedingt erforderlich, den Wälzlageraußenring in ein ringförmig umschließendes äußeres Kunststoff-Spritzteil einzuspritzen. Es genügt, wenn etwa acht bis zwölf derartiger Sitzrippen vorgesehen sind, die sich möglichst gleichmäßig am Umfang des Wälzlageraußenrings verteilen. Hierdurch wird ebenfalls eine völlig symmetrische Einspannung des Wälzlageraußenrings durch Schrumpfung erzielt.

Im folgenden wird die Erfindung anhand von Ausführungsbeispielen näher erläutert. Es zeigen:
- Fig.1: ein erstes Ausführungsbeispiel der Erfindung,
- Fig.2: ein weiteres Ausführungsbeispiel der Erfindung.

Sofern im folgenden nichts anderes gesagt ist, gilt die folgende Beschreibung stets für alle Figuren.

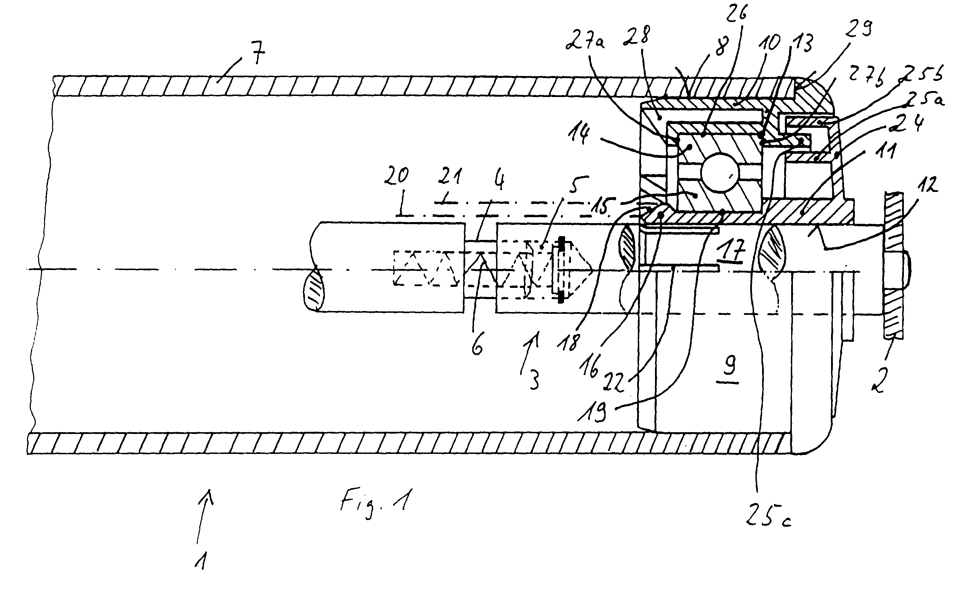

Fig.1 zeigt eine Förderrolle 1. Derartige Förderrolle 1 ist in einem Lagerrahmen 2 endseitig gelagert. Derartige Förderrollen sitzen in Vielzahl benachbart zueinander in dem sich in Förderrichtung erstreckenden Lagerrahmen 2. Zur Befestigung der Förderrolle 1 am Lagerrahmen 2 dient eine Rollenachse 3. Die Rollenachse 3 ist in Axialrichtung zumindest soweit verkürzbar, daß die Länge des im Lagerrahmen 2 steckenden Zapfens der Rollenachse 3 durch Zusammenschieben der Rollenachse 3 aus dem Eingriff mit dem Lagerrahmen 2 kommt.

Zu diesem Zweck ist die Rollenachse 3 zweiteilig ausgebildet. Sie sitzt mit einem Zapfen 4 in einer Bohrung 5 des jeweils benachbarten Achsenabschnitts. Beide Achsenabschnitte sind über eine Druckfeder 6 aufeinander elastisch abgestützt. Auf diese Weise läßt sich der eine Achsenabschnitt relativ zum anderen verschieben. Die gesamte Förderrolle 1 kann damit montiert und demontiert werden.

Die Förderrolle 1 wird gebildet von einem Rollenzylinder 7, der an seinen Enden mit seinem Innenumfang auf einem äußeren Umfangssitz 8 gelagert ist. Der äußere Umfangssitz 8 ist Bestandteil des Lagereinsatzes 9. Der Lagereinsatz 9 besteht aus einem Außenring 10 und einem relativ dazu drehbaren Innenring 11.

Wesentlich ist, daß der Außenring 10 und daß der Innenring 11 von jeweils einem separaten äußeren bzw. inneren Kunststoff-Spritzteil gebildet werden. Das äußere Kunststoff-Spritzteil weist an seinem Außendurchmesser den äußeren Umfangssitz 8 auf für den Rollenzylinder 7. Das innere Kunststoff-Spritzteil 11 bietet den inneren Umfangssitz 12 für die Rollenachse 3. Wesentlich ist auch, daß an dem äußeren Kunststoff-Spritzteil 10 der Wälzlageraußenring 14 des Wälzlagers 13 eingespritzt ist und daß an dem inneren Kunststoff-Spritzteil 11 eine den Wälzlagerinnenring 15 hintergreifende Einschnappverrastung 16 vorgesehen ist.

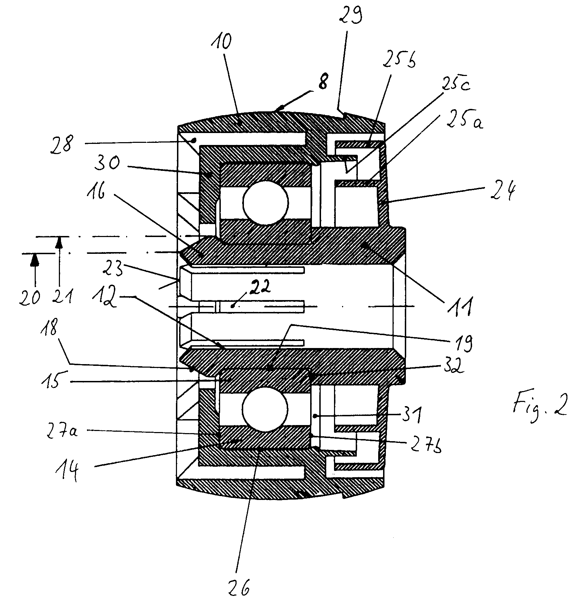

Im Unterschied hierzu ist der Wälzlageraußenring 14 des Wälzlagers 13 bei dem Ausführungsbeispiel gemäß Fig.2 nicht in das äußere Kunststoff-Spritzteil 10 eingespritzt.

Im Falle der Fig.2 weist das äußere Kunststoff-Spritzteil 10 in Übereinstimmung mit dem Ausführungsbeispiel gemäß Fig.1 von der Sitzfläche des Wälzlageraußenrings 14 nach innen gesehen einen radial eingeschnürten Ringbund 30 auf, der die innere Stirnseite des Wälzlageraußenrings 14 umfaßt.

Abweichend von der Darstellung gemäß Fig.1 erstreckt sich von der Sitzfläche des Wälzlageraußenrings nach außen gesehen ein axialer Ringsteg 25c. In diesem Fall ist der Innendurchmesser des axialen Ringsteges 25c geringfügig größer als der Außendurchmesser des Wälzlagers 13. Dies bietet den Vorteil, daß beim Einbau des Wälzlagers 13 der Ringsteg 25c eine Art von axialer Führung für das Wälzlager 13 bietet, so daß dieses im wesentlichen verkantungsfrei auf seine Sitzfläche geschoben werden kann.

Zusätzlich ist hier vorgesehen, daß zwischen dem Ringsteg 25c und der Sitzfläche eine in Umfangsrichtung verlaufende Verdickung 31 angeordnet ist. Die Verdickung 31 begrenzt die axiale Länge der Sitzfläche zur Außenseite der Förderrolle. Zwischen der Verdickung 31 und dem Ringbund 30 wird daher das Wälzlager 13 axial gefesselt.

Zusätzlich ist realisiert, daß sich die Verdickung 31 in beide Axialrichtungen mit einer schrägen Flanke zu ihrer Mitte erhebt. Die schräge Flanke ermöglicht das Einstecken des Wälzlagers 13 auf bzw. das Abschieben des Wälzlagers 13 von der Sitzfläche, ohne daß die axiale Fesselung des Wälzlagers hierdurch beeinträchtigt würde.

Beim Auftreffen des Wälzlagers 13 auf die schräge Flanke der Verdickung 31 kann sich das äußere Kunststoff-Spritzteil 10 radial so weit aufdehnen, daß der Wälzlageraußenring 14 unter Ausnutzung der Materialelastizität des äußeren Kunststoff-Spritzteils 10 auf seinen und von seinem Pressitz auf- bzw. abgeschoben werden kann.

Der Wälzlageraußenring 14 sitzt somit für beide Ausführungsformen fest im äußeren Kunststoff-Spritzteil 10 verankert. Der Wälzlagerinnenring 15 ist in beiden Fällen auf dem Einsteckzapfen 17 gelagert, welcher auch die Einschnappverrastung 16 aufweist. Die Einschnappverrastung 16 liegt somit formschlüssig innen am Wälzlagerinnenring 15 an. Zu diesem Zweck weist das innere Kunststoff-Spritzteil 11 einen hohlen Einsteckzapfen 17 auf, der in den Wälzlagerinnenring 15 formschlüssig eingesteckt ist. An seinem freien Ende weist der Einsteckzapfen 17 eine sich nach außen erweiternde konische Anschrägung 18 auf. Hinter der konischen Anschrägung 18 ist ein geradzylindrischer Bereich ausgebildet, der den umlaufenden Wälzlagersitz 19 bietet. Die konische Anschrägung 18 besitzt einen Minimaldurchmesser 20, der kleiner als der Sitzdurchmesser des Wälzlagersitzes 19 ist, während die konische Anschrägung 18 auch einen Maximaldurchmesser 21 aufweist, der größer als der Durchmesser des Wälzlagersitzes 19 ist.

In den gezeigten Ausführungsbeispielen ist der Einsteckzapfen rundzylindrisch und bietet daher auf seinem gesamten Umfang einen sicheren Sitz für das umschließende Wälzlager. Der Sitz wird lediglich unterbrochen von Axialschlitzen 22, die vom freien Ende 23 herkommend in den Einsteckzapfen 17 eingebracht sind und dabei zumindest das erste Drittel des Wälzlagersitzes 19 einnehmen, in jedem Falle nicht über die Breite des Wälzlagersitzes 19 hinausgehen.

Auf diese Weise wird erreicht, daß der Einsteckzapfen 17 nicht nur mit einem Handgriff in den Wälzlagerinnenring 15 eingesteckt werden kann, sondern auch, daß der hohle Einsteckzapfen 17 formschlüssig und spielfrei auf der Rollenachse 3 sitzt.

Dies wird dadurch erreicht, daß der Einsteckzapfen 17 auch innen rundzylindrisch ist und dabei lediglich an den Axialschlitzen 22 nicht auf der Rollenachse 3 aufliegt.

Eine sowohl in radialer als auch in axialer Richtung einspannfeste Lagerung des Wälzlageraußenrings 14 wird in beiden Fällen dadurch erreicht, daß das äußere Kunststoff-Spritzteil 10 den Wälzlageraußenring 14 sowohl am Außenumfang 26 als auch an seinen beiden Stirnseiten 27a,27b umschließt. Auf diese Weise wird der Wälzlageraußenring in radialer sowie in beiden Axialrichtungen gegenüber dem äußeren Kunststoff-Spritzteil 10 gefesselt.

Dabei unschließt das äußere Kunststoff-Spritzteil 10 den Wälzlageraußenring 14 auf seinem gesamten Außenumfang 26. Zur Überbrückung des Radialabstandes zwischen dem Umfassungsring des Wälzlageraußenrings 14 und dem Sitzring für das Ende des Rollenzylinders 7 sind in das äußere Kunststoff-Spritzteil 10 eine Vielzahl von axial und radial verlaufenden Sitzrippen 28 eingespritzt. Die Sitzrippen 28 verlaufen stegartig zwischen dem Ringbereich des äußeren Kunststoff-Spritzteils, welcher das Wälzlager umfaßt, und demjenigen Ringbereich, welcher den äußeren Umfangssitz 8 für den Rollenzylinder 7 bietet.

Man bekommt auf diese Weise ein leichtes und materialsparendes Bauteil, welches praktisch montagefertig für die Endmontage der Förderrolle 1 zur Verfügung steht.

Um darüber hinaus Montagefehler zu vermeiden, ist der äußere Umfangssitz 8 mit einem Anschlagbund 29 versehen. Bei dem Einstecken des Lagereinsatzes in den Rollenzylinder 7 wird daher die Einsteckbewegung durch den Anschlagbund 29 begrenzt, sobald der Rollenzylinder 7 mit seiner freien Stirnfläche gegen den Anschlagbund 29 fährt.

Während im Falle der Fig.1 der Rollenzylinder 7 auf einen geradzylindrischen Außenbereich des äußeren Kunststoff-Spritzteils aufgeschoben ist, ist im Falle der Fig.2 der äussere Umfangssitz 8 bis zum Anschlagbund 29 gekülpt.

Das Ausführungsbeispiel gemäß Fig.1 ist daher insbesondere für Kunststoffrohre vorgesehen. Dort wird ein geradzylindrischer Sitz bevorzugt.

Im AusFührungsbeispiel gemäß Fig.2 wird üblicherweise ein Metallrohr auf den Lagereinsatz aufgeschoben. Dabei ist der Rohrdurchmesser kleiner als der Größtdurchmesser des äusseren Umfangssitzes. Die Fläche des äußeren Umfangssitzes 8 verläuft ballig und weist in einer Radialebene ihren Größtdurchmesser auf. Somit kann der Lagereinsatz unter Vorspannung in das Ende des Metallrohres eingesteckt werden. Anschließend wird das aufgesteckte Rohrende allseitig umfaßt und soweit zusammengeschnürt, daß es mit seiner Innenfläche dicht auf dem äußeren Umfangssitz 8 anliegt. Diesen Vorgang bezeichnet man als "Külpen". Hierdurch wird eine praktisch unlösbare Verbindung zwischen dem Rollenzylinder 7 und dem Lagereinsatz erzeugt. Diese praktisch unlösbare Verbindung in Verbindung mit der hohen Steifigkeit der Lagerung infolge der axialen Fesselung von Wälzlageraußenring 14 und Wälzlagerinnenring 15 bedingt die angestrebt hohe Dauerhaltbarkeit dieses Lagereinsatzes.

Ferner ist jeweils verwirklicht, daß das innere Kunststoff-Spritzteil 11 das freie Ende 23 des äußeren Kunststoff-Spritzteils 10 mit einem Ringdeckel 24 übergreift, und daß äußeres Kunststoff-Spritzteil 10 und inneres KunststoffSpritzteil 11 im Bereich des Ringdeckels 24 miteinander korrespondierende ringförmig umlaufende berührungslose Labyrinthdichtungen aufweisen.

Zu diesem Zweck weist hier das innere Kunststoff-Spritzteil zwei umlaufende Ringstege 25a,25b auf, die sich axial in das Innere der Förderrolle 1 erstrecken und die von dem Ringdeckel 24 nach außen abgeschlossen sind. In den zwischen den umlaufenden Ringstegen 25a,25b aufgespannten Ringraum greift ein umlaufender Ringsteg 25c des äußeren Kunststoff-Spritzteils 10 ein, so daß insgesamt ein Labyrinth entsteht, welches gebildet wird von feststehenden Ringstegen 25a,25b und dem rotierenden Ringsteg 25c. Dennoch bleibt diese Dichtung stets berührungsfrei und somit verschleißfrei.

Im Ausführungsfall gemäß Fig.2 besteht noch die Besonderheit, daß der axiale Ringsteg 25c neben seiner Führungsfunktion zur Montage des Wälzlagers 13 auch an der Dichtungswirkung beteiligt ist.

Der Ringsteg 25c erfüllt daher eine Doppelfunktion. Dies wird dadurch erreicht, daß sein Innendurchmesser geringfügig größer als der Außendurchmesser des Wälzlageraußenrings 14 ist und daß er sich axial nach außen in Richtung zum Ringdeckel 24 erstreckt.

Dabei soll ausdrücklich gesagt sein, daß von der Erfindung auch ein Lagereinsatz umfaßt wird, bei welchem das Wälzlager in ein inneres Kunststoff-Spritzteil eingespritzt ist, derart, daß der Wälzlagerinnenring vom Kunststoff umfaßt wird, während das äußere Kunststoff-Spritzteil mit einer Einschnappverrastung den Wälzlageraußenring sitzend umgreift.

### Bezugszeichenliste:

- 1: Förderrolle
- 2: Lagerrahmen
- 3: Rollenachse
- 4: Zapfen
- 5: Bohrung
- 6: Druckfeder
- 7: Rollenzylinder
- 8: äußerer Umfangssitz
- 9: Lagereinsatz
- 10: Außenring, äußeres Kunststoff-Spritzteil
- 11: Innenring, inneres Kunststoff-Spritzteil
- 12: innerer Umfangssitz
- 13: Wälzlager
- 14: Wälzlageraußenring
- 15: Wälzlagerinnenring
- 16: Einschnappverrastung
- 17: Einsteckzapfen
- 18: konische Anschrägung
- 19: Wälzlagersitz
- 20: Minimaldurchmesser der konischen Anschrägung
- 21: Maximaldurchmesser der konischen Anschrägung
- 22: Axialschlitz
- 23: freies Ende des äußeren Kunststoff-Spritzteils
- 24: Ringdeckel
- 25a: umlaufender Ring, feststehend
- 25b: umlaufender Ring, feststehend
- 25c: umlaufender Ring, rotierend
- 26: Außenumfang des Wälzlagers
- 27a: Stirnseite
- 27b: Stirnseite
- 28: Sitzrippe
- 29: Anschlagbund
- 30: Ringbund
- 31: Verdickung
- 32: Durchmesserstufe

## Patentansprüche

1. Lagereinsatz (9) für das Ende einer Förderrolle, der mit einem äußeren Umfangssitz (8) in den Rollenzylinder (7) der Förderrolle endseitig eingesteckt ist und einen relativ zum äußeren Umfangssitz (8) mittels Wälzlagers (13) drehbaren inneren Umfangssitz (12) mit Durchgangsbohrung für eine durchgesteckte Rollenachse (3) aufweist, wobei der äußere Umfangssitz (8) an einem äußeren und der innere Umfangssitz (12) an einem inneren Kunststoff-Spritzteil (10,11) angebracht ist, welche Kunststoff-Spritzteile (10,11) gegenseitig berührungsfrei sind, und wobei an dem äußeren Kunststoff-Spritzteil (10) der Wälzlageraußenring (14) mit radialem Pressitz eingepaßt ist und an dem inneren Kunststoff-Spritzteil (11) eine den Wälzlagerinnenring (15) hintergreifende Einschnappverrastung (16) vorgesehen ist, welche auch die axiale Festlegung des Wälzlagerinnenrings (15) gegen eine Durchmesserstufe (32) des inneren Kunststoff-Spritzteils (11) hervorruft,
**dadurch gekennzeichnet,** daß
1.0 der Wälzlageraußenring (14) zusätzlich zum Pressitz auch in beide Axialrichtungen festgelegt ist, und daß
1.1 die Außenseite des Wälzlagers (13) ausschließlich über berührungslose Dichtmittel (25a,25b,25c) zwischen innerem und äußerem Kunststoff-Spritzteil (10,11) zur Umgebung abgedichtet ist.

2. Lagereinsatz nach Anspruch 1, **dadurch gekennzeichnet,** daß ein Wälzlager mit Fettfüllung verwendet wird.

3. Lagereinsatz nach Anspruch 1 oder 2, **dadurch gekennzeichnet,** daß das äußere Kunststoff-Spritzteil (10) den Wälzlageraußenring (14) am Außenumfang (26) sowie an beiden Stirnseiten (27a,27b) umfaßt.

4. Lagereinsatz nach Anspruch 3, **dadurch gekennzeichnet,** daß der Wälzlageraußenring von dem Material des äußeren Kunststoff-Spritzteils am Außenumfang (26) sowie an beiden Stirnseiten (27a,27b) umspritzt ist.

5. Lagereinsatz nach Anspruch 3, **dadurch gekennzeichnet,** daß
5.1 das äußere Kunststoff-Spritzteil
5.11 von der Sitzfläche des Wälzlageraußenrings (14) nach innen gesehen einen radial eingeschnürten Ringbund (30) aufweist, der die innere Stirnseite des Wälzlageraußenrings (14) umfaßt, sowie
5.12 von der Sitzfläche des Wälzlageraußenrings (14) nach außen gesehen einen axialen Ringsteg (25c) mit einem Innendurchmesser, der geringfügig größer als der Außendurchmesser des Wälzlagers (13) ist, und daß
5.2 zwischen diesem Ringsteg (25c) und der Sitzfläche eine in Umfangsrichtung verlaufende Verdickung (31) vorgesehen ist, welche
5.3 sich in beiden Axialrichtungen mit einer schrägen Flanke zu ihrer Mitte und soweit erhebt, daß
5.4 der Wälzlageraußenring (14) unter Ausnutzung der Materialelastizität des äußeren Kunststoff-Spritzteils (10) auf seinen und von seinem Pressitz auf- bzw. abgeschoben werden kann.

6. Lagereinsatz nach einem der Ansprüche 1 bis 5, **dadurch gekennzeichnet,** daß die berührungslosen Dichtmittel von zumindest drei konzentrischen axialen Ringstegen (25a, 25b) gebildet werden, die wechselweise am äußeren und inneren Kunststoff-Spritzteil (10,11) sitzen und die sich in einem gemeinsamen Axialbereich überlappen.

7. Lagereinsatz nach einem der Ansprüche 1 bis 6, **dadurch gekennzeichnet,** daß der Einsteckzapfen (17) rundzylindrisch ist und vom freien Ende kommend in Richtung zum Wälzlagersitz (19) von Axialschlitzen (22) durchbrochen ist, die mindestens bis zur axialen Mitte jedoch nicht weiter als bis zum Ende des Wälzlagersitzes gehen.

8. Lagereinsatz nach einem der Ansprüche 1 bis 7, **dadurch gekennzeichnet,** daß das äußere Kunststoff-Spritzteil (10) einen Anschlagbund (29) für den aufgesteckten Rollenkörper besitzt, und vorzugsweise daß der äußere Umfangssitz (8) bis zum Anschlagbund (29) gekülpt ist.

9. Lagereinsatz nach einem der Ansprüche 1 bis 8, **dadurch gekennzeichnet,** daß beide Kunststoff-Spritzteile (10,11) aus elektrisch leitfähigem Polypropylen bestehen und jeweils einen elektrischen Widerstand zwischen dem äußeren Umfangssitz (8) und der Kontaktfläche des inneren Kunststoff-Spritzteils (11) zur Rollenachse (3) im Bereich zwischen 100 Ohm und 1.000.000 Ohm aufweisen.
